# EUROPEAN PATENT SPECIFICATION

(11) **EP 3 679 249 B1**
(45) Date of publication and mention of the grant of the patent: **16.06.2021**
(21) Application number: 18765804.2
(22) Date of filing: 31.08.2018
(51) Int. Cl.: F03D 80/30

(54) **DEVICE AND METHOD FOR PERFORMING RETROFITTING PROCESS ON A WIND TURBINE BLADE**
APPARAT UND METHODE, UM RETROFITTING-PROZESS AUF EINEM WINDTURBINENBLATT DURCHZUFÜHREN
DISPOSITIF ET MÉTHODE POUR EXÉCUTER PROCESSUS DE RATTRAPAGE SUR UNE PALE D'ÉOLIENNE

(30) Priority: 06.09.2017 US 201762554617 P; 12.09.2017 DK PA201770685
(43) Date of publication of application: 15.07.2020
(73) Proprietor: Vestas Wind Systems A/S, 8200 Aarhus N (DK)
(72) Inventor: BRILLIANT, Nathan, Arvada, Colorado 80003 (US); IRISSAPPANE, Vijayasankar, 6950 Ringkøbing (DK); STRATTON, Lyle, Greeley, Colorado 80634 (US); MATHIASEN, Bjarne Korshøj, 6900 Skjern (DK); LEAVER, Andrew, Fort Collins, Colorado 80526 (US); MOGENSEN, Bo Birkelund, 7480 Vildbjerg (DK)
(74) Representative: Vestas Patents Department
(86) International application number: PCT/DK2018/050216
(87) International publication number: WO 2019/048015

(56) References cited:
- WO-A1-2014/200333
- US-A1- 2003 010 441
- US-A1- 2011 067 795
- US-A1- 2012 020 791
- US-A1- 2016 039 144

## Description

### Technical field

The invention relates to a device for aligning a tool with an object or workpiece so that a process can be carried out on a surface of that workpiece. The device has particular utility for surfaces of wind turbine blades where drilling processes may need to be performed on the blade, for example to install components of a lightning protection system.

### Background

Wind turbines blades are usually designed with in-built lightning protection systems which enable them to manage the energy discharged into the blade during a lightning strike in an effective way that avoids damage occurring to the blade. Typically a lightning protection system will include discrete bolt-like receptor elements that penetrate the blade shell. Such receptor elements comprise a metallic head that is left exposed at the blade surface and an elongate connection shaft that extends through the blade shell into the blade interior to be connected to a down conductor. As well as receptor elements, it is known for lightning protection systems to also incorporate metallic mesh-like surface protection layers and receptor elements in the form of metallic blade tips.

An example of a lightning protection system is shown in the Applicant's International patent application WO2015/055215, which describes a wind turbine blade including a surface protection layer embedded in the blade surface. The blade includes a series of receptor elements that are exposed at the blade surface, and which establish an electrical contact with the surface protection layer and extend through the blade shell to connect to a down conducting system. Such a protection system is cost effective to manufacture and effective in operation. Installation of the receptor elements takes place once the main blade structure has been completed, in a so-called post-finishing process. To install the receptor elements, holes must be drilled into the blade shell at a precise location in order that the shanks of the receptor elements engage with the connector bases in the blade interior. Furthermore, the holes must be drilled in a predetermined orientation with respect to the blade surface to ensure that the correct path through the blade shell is followed. Usually the hole needs to be drilled so that it extends along a path that is perpendicular to the blade surface at the mouth of the hole, although other angles may be required.

Supporting a drill in an accurate position and maintaining precise alignment off the drill bit during the drilling process is challenging. Supportive jigs are known, but such jigs tend to be large, heavy and unwieldy structures. US 2016/039144 A1 discloses one example of a known device for aligning a tool at a predetermined orientation with respect to a target surface of a wind turbine blade. It is against this background that the embodiments of the invention have been devised.

### Summary of the invention

Embodiments of the invention provide a device for aligning a tool at a predetermined orientation with respect to a target surface of a wind turbine blade, the device comprising: a suction cup having an outer sealing element for sealing against the target surface; an inner sealing element located radially inward of the outer sealing element for sealing against the target surface, a suction cavity being defined between the outer sealing element and the inner sealing element; and a tool guide located radially inward of the inner sealing element, wherein the tool guide defines a tool access passage.

The invention provides a simple and robust device for aligning a tool to a target surface of a workpiece, such that processing of the workpiece can be undertaken at a predetermined orientation.

The tool guide may be an annular element, and may include a guide insert receivable in the tool access passage. The inner sealing element may be a sealing ring.

The outer sealing element and the tool guide may be concentric.

The device may include a rigid body portion, and the outer sealing element may extend from the rigid body portion.

The outer sealing element and/or the inner sealing element may be flexible so as to be able to accommodate irregularities and curvature of the target surface. This assists in providing a more effective seal between the suction cup and the workpiece.

The suction cup and, thus, the outer sealing element, may be circular in plan profile. Alternatively, the suction cup and, thus, the sealing element, may have a stadium or oval shape in plan profile. Different general shapes of the suction cup and outer sealing element allow for use of the device in different applications or scenarios. For example, a stadium shaped suction cup and sealing element is advantageous because it allows the device to be used in narrower spaces than would be possible with a more rounded shape. Furthermore, the oval shape lends itself for use on surfaces having greater curvature.

The device may include means for evacuating the suction cup. The means for evacuating the suction cup may include a port for connection to a vacuum source.

The device may be configured such that misalignment of a tool received in the tool guide with respect to the target surface of the workpiece causes the device to disengage from the workpiece. The device may be configured such that misalignment of a tool received in the tool guide with respect to the target surface of the workpiece results in an audible noise that alerts a user of the device to the misalignment of the tool. In this way, a user of the device can be confident of processing the workpiece at the intended predetermined orientation.

The device may be configured such that a longitudinal axis of a tool received in the tool guide is perpendicular to the target surface of the workpiece when the device is attached to the target surface, in use.

Alternatively, the device may be configured such that a longitudinal axis of a tool received in the tool guide is at an oblique angle to the target surface when the device is attached to the target surface, in use.

The inner sealing element may be located on the tool guide. Or, the inner sealing element may be located between the outer sealing element and the tool guide.

The workpiece may comprise a wind turbine blade and the tool may comprise a drill bit of a drill.

Embodiments of the invention provide a device for aligning a tool at a predetermined orientation with respect to a target surface of a workpiece. The device comprises: an outer sealing element configured to establish a seal with the target surface; an inner sealing element configured to establish a seal with the target surface; a chamber defined between the outer sealing element and the inner sealing element when the device is engaged with a target surface; means for removing air from the chamber; wherein the inner sealing element extends about a tool guide member.

A further aspect of the invention provides a method of guiding a tool with respect to a surface of a workpiece. The method comprises: applying a device in accordance with the device described in the preceding paragraphs to the surface of the workpiece; establishing a negative pressure in the suction cup of the device; bringing a tool into engagement with the tool guide of the device; using the tool on the workpiece.

In some embodiments, the workpiece may be a wind turbine blade and the tool may be a drill bit of a drill. In these embodiments, the step of using the tool on the workpiece may comprise drilling a hole in the wind turbine blade for receiving a component of a lightning protection system. The drilled hole may extend into the wind turbine blade perpendicularly with respect to the target surface at a mouth of the hole. Alternatively, the drilled hole may extend into the wind turbine blade at an oblique angle with respect to the target surface at a mouth of the hole.

The method may comprise locating the device on the workpiece by means of a pre-drilled locating hole.

### Brief description of the drawings

For a more complete understanding of the invention, some embodiments of the invention will now be described with reference to the following drawings, in which:
Figure 1 is a plan view of a wind turbine blade equipped with a lightning protection system;
Figure 2 is a section through a leading edge region of the turbine blade in Figure 1;
Figure 3 is an enlarged perspective view of the surface protection layer in exploded format;
Figure 4 is an enlarged view of a region of Figure 2 marked as 'A' in which a connector assembly is shown establishing an electrical contact between the surface protection layer and a down conducting system of the blade;
Figure 5 is a perspective view of an alignment device in accordance with a first embodiment of the invention;
Figure 6 is a perspective view of the alignment device of Figure 5, showing an underside of the alignment device;
Figure 7 is a perspective view of a guide insert of the alignment device of Figure 5 in isolation;
Figure 8 is a perspective view of a guide insert collar of the alignment device of Figure 5 in isolation;
Figure 9 is a cross-section through the alignment device of Figure 5;
Figure 10 is a schematic side view of the alignment device of Figure 5 attached to the wind turbine blade, showing a drill bit received in the alignment device and ready for use;
Figure 11 is a schematic side view of the alignment device of Figure 5 attached to the wind turbine blade, showing the drill bit received in the alignment device in an incorrect orientation with respect to a surface of the wind turbine blade;
Figure 12 is a schematic side view of the alignment device of Figure 5, showing the drill bit received in the alignment device and in the process of drilling a hole in the wind turbine blade;

### Detailed description

The present invention relates to a device for aligning a tool at a predetermined orientation with respect to a target surface of a wind turbine blade.

As discussed above, wind turbine blades having lightning protection systems require receptor elements to be installed at specific locations on the blade, and having specific orientations to the blade surface. For this, receptor-receiving holes having a specific orientation to the blade surface at the mouth of the hole are required. In one envisaged embodiment of the invention that will be described below, the alignment device is used for aligning a drill bit to a target surface of a workpiece in the form of a wind turbine blade, for drilling receptor-receiving holes at a specified orientation. In this embodiment, the drill bit is aligned such that the drilled holes extend perpendicularly to the surface of the wind turbine blade at the mouth of the hole, although this orientation may not be required in all embodiments of the invention.

To assist the reader and provide context for the invention, a wind turbine blade having a lightning protection system on which the alignment device may be used will first be described, before turning our attention to the alignment device itself.

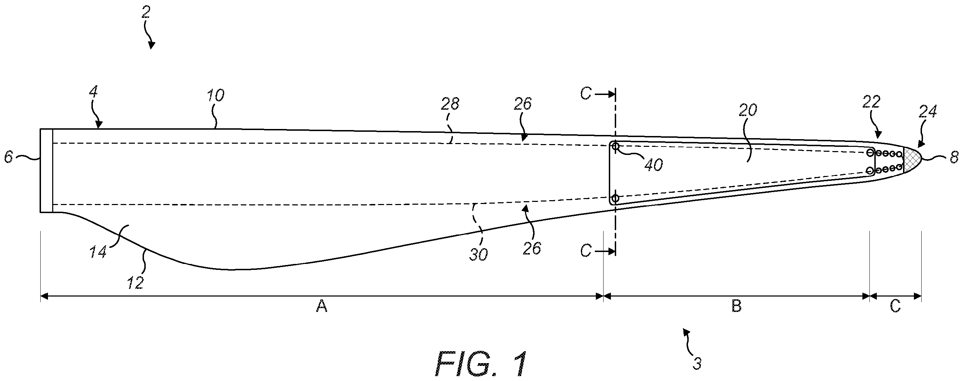

With reference to Figure 1, a wind turbine blade 2 incorporates a lightning protection system 3. The blade 2 is formed from a blade shell 4 having two half-shells. The half-shells are typically moulded mainly from fibre reinforced plastic (known as 'FRP') that comprises fibre fabric, often glass-fibre, embedded in a cured resin matrix.

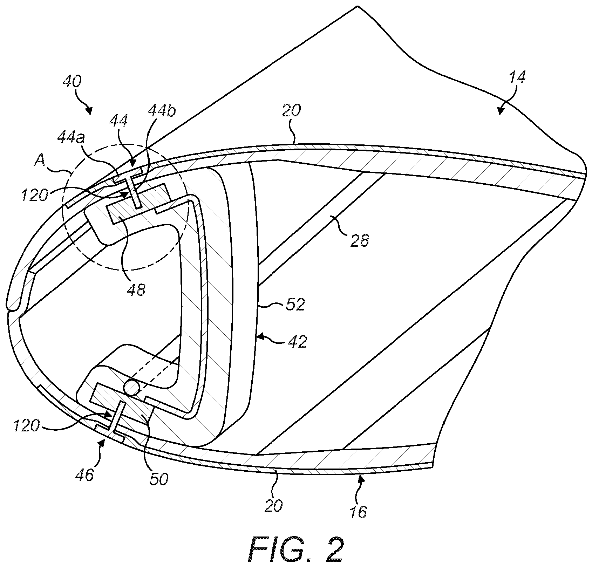

The blade 2 comprises a root end 6, at which the blade 2 would be attached to a rotor hub of a wind turbine, a tip end 8, a leading edge 10 and a trailing edge 12. A first outer surface 14 of the blade 2 defines an aerodynamic profiled surface that extends between the leading edge 10 and the trailing edge 12. The blade 2 also includes a second surface also extending between the leading edge 10 and trailing edge 12, which is not shown in the plan view of Figure 1, but which is indicated as reference numeral 16 in Figure 2.

Turning to the lightning protection system 3, this is based on a 'zoning' concept in which the blade 2 is demarcated in a longitudinal or 'span-wise' direction into regions or 'zones' depending on the probability of receiving a lightning strike in that region. A similar principle is described in WO2013/007267.

Here, the blade 2 is divided into three zones for the purposes of lightning protection - these are illustrated in Figure 1 as zones A, B and C. Zone A extends from the root end 6 of the blade to approximately 60% of the blade length in the span-wise direction. In this zone, the blade 2 has a low risk of a lightning strike and so will be expected to receive a low incident of strikes at low current amplitudes, and low total charge transfer, which is acceptable for blade structural impact. In this example, the blade 2 is not equipped with any external lightning protection within this zone.

Zone B extends from the end of zone A to approximately 90% of the blade length in a span-wise direction. In this zone the blade 2 has a moderate risk of lightning strike and is expected to withstand moderately frequent direct lightning strike attachments having increased impulse current, peak current and total charge transfer. Accordingly, the blade 2 is provided with a first lightning protection sub-system in the form of a surface protection layer 20.

Finally, zone C extends from the end of zone B to the tip end 8 of the blade 2. In this zone the blade 2 is subject to a high likelihood of lightning strikes and is expected to withstand peak current amplitudes of in excess of 200kA and total charge transfer in excess of 300 coulomb and, moreover, a high incident of strikes. To provide the required level of protection for the blade, zone C includes two further lightning protection sub-systems, namely an array of receptors 22 and a blade tip assembly 24. Both the receptor array 22 and the blade tip assembly 24 are electrically connected to a down conducting system 26, comprising first and second down conductors 28, 30 running along the length of the blade 2 from the tip end 8 to the root end 6, generally being arranged adjacent the leading edge 10 and trailing edge 12 of the blade 2, respectively.

As has been mentioned, the surface protection layer 20 is in zone B and comprises an electrically conductive layer that is integrated into both the upper half-shell and the lower half-shell of the blade 2. The conductive layer may be a metallic screen or mesh, and preferably a mesh/screen in the form of an expanded metal foil, e.g. an expanded aluminium foil, that acts to attract lightning strikes over a large area of the blade and which is connected to the down conducting system 26 in a manner that will be described. The surface protection layer 20 is connected to the down conductors 28, 30 by a plurality of connector arrangements 40. In some arrangements, four connector arrangements 40 are included on the blade 2, two being adjacent the leading edge 10 of the blade and two being adjacent the trailing edge 12 of the blade 2. Other arrangements are possible.

Figure 2 shows a leading edge connector arrangement 40 in more detail. The connector arrangement 40 includes a block-like connector component 42 that forms part of the down conducting system and which is shaped to fill the volume in the relatively deep profile of this region of the blade 2 and provide an electrical connection to a first connector element 44 associated with the leeward surface 14 and a second connector element 46 associated with the windward surface 16.

The connector component 42 comprises first and second connector bases 48, 50 that are encapsulated by an insulating member 52 that is generally annular in form. The connector bases 48, 50 are conductive, preferably brass for its high conductivity, corrosion resistance, and suitability for drilling, although other metals or alloys are acceptable. The insulating member 52 is moulded directly to the connector bases 48, 50 and so serves to suppress the initiation of ionization and streamers during highly charged environmental conditions, which thereby guards against a lightning strike directly onto the connector bases 48, 50 rather than on a connector element 44, 46. The insulating member 52 is formed of a suitable polymer having a high dielectric strength, for example polyurethane.

The first connector element 44 electrically couples the surface protection layer 20 on the leeward surface 14 to the first connector base 48. Similarly, the second connector element 46 couples the surface protection layer 20 on the windward surface 16 to the second connector base 50. The connector elements 44, 46 are identical so only one of them shall be described in detail. The first connector element 44 is in the form of a bolt having a head 44a and a shank or stem 44b. Stainless steel is typically used for the bolt, although other conductive materials, particularly metals, are also acceptable. The shank 44b extends through the blade 2 and engages with the first connector base 48 by way of cooperating screw threads, and the head 44a is arranged to lie flush with the surrounding surface of the surface protection layer 20. The connector element 44 is installed in the blade after the blade has been fabricated and removed from its mould. Holes 120 or drillings are formed through the blade skin from the exterior surface to the interior surface and into the receptor base 48, and are preferably perpendicular to the blade surface. Following formation of the hole 120, the connector element 44 is inserted into the hole 120 and screwed into or otherwise engaged with the receptor base 48 to make the electrical connection. An identical arrangement is provided to couple the surface protection layer 20 on the windward surface 16 to the second connector base 50.

As has been mentioned above, the head of the connector element 44 defines an electrical coupling or interface between the surface protection layer 20 and the respective connector component 42. In particular, the connector element electrically couples the surface protection layer 20 at the outer surface of the blade to the down conductor 28 in the interior of the blade.

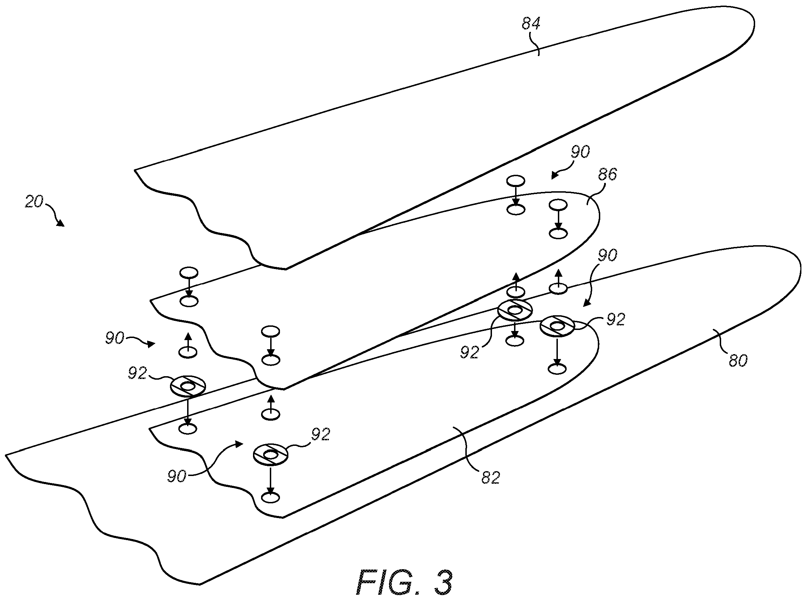

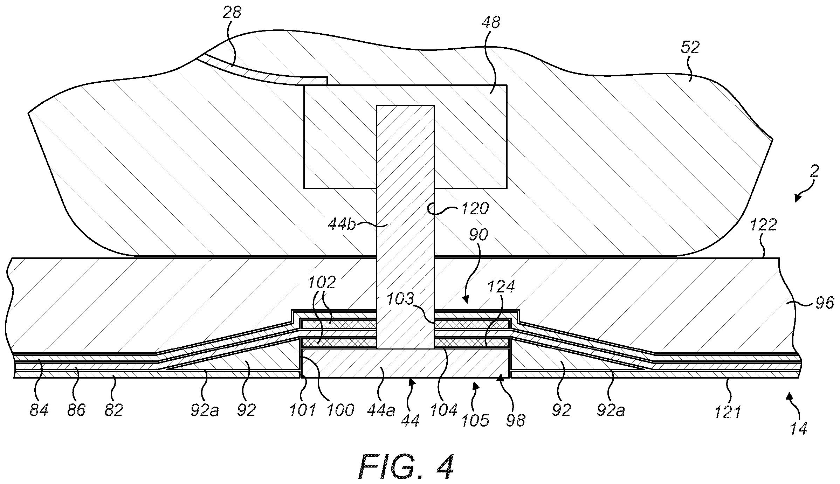

Note that the upper surface of the head 44a is exposed at the blade surface and so can also serve as a receptor element for lightning strikes. The surface protection layer 20 and, in particular, the electrical connection between it and the connector element 44 will now be described with reference to Figures 3 and 4.

In Figure 3, the surface protection layer 20 is shown in exploded view for clarity against a blade mould surface portion 80. In this example, the surface protection layer 20 includes three main components: an outer insulating layer 82, an inner insulating layer 84 and a conductive layer 86 sandwiched between the insulating layers 82, 84.

Both the outer insulating layer 82 and the inner insulating layer 84 are glass fibre fabric. The outer insulating layer 82 becomes the outer surface or skin of the blade 2 once the blade 2 is fully fabricated. Therefore it is preferred that the outer insulating layer 82 is a relatively lightweight fabric, for example less than 200gsm, so as not to inhibit the formation of leaders from the conductive layer 86 during lightning conditions. The thin outer insulating layer 82 also reduces the risk of surface damage during a strike. Conversely, since it is desirable to insulate in-board from the surface protection layer 20, the weight of the inner insulating layer 84 is heavier, for example around 600gsm.

In order to promote a good electrical contact between the conductive layer 86 and the connector element 44, the conductive layer includes reinforced zones, identified in Figure 3 generally as '90'. The reinforced zones 90 serve to strengthen the conductive layer 86 in localised regions by thickening the metal foil. For example, the conductive layer 86 may undergo a soldering or casting process to solidify the expanded foil in localised regions. Alternatively, one or more conductive elements in the form of plates, discs or the like are bonded to the conductive layer 86 in the required zones. Bonding may be by way of brazing for example. The reinforced zone 90 may improve the robustness of the conductive layer 86 where it connects to the connecting element 44.

In each reinforced zone 90, a forming element 92 is applied to the outer insulating layer 82 prior to the lay down of the conductive layer 86. The forming element shapes the conductive layer 86 during blade fabrication to provide a recess for receiving a respective connector element 44 so that the surface protection layer 20 can be electrically connected to the internal components of the down conducting system 26.

In establishing the electrical connection between the surface protection layer 20 and the down conducting system 26, it is important that the connector elements 44 extend through the blade shell at an angle that is perpendicular to the surrounding region of the surface protection layer 20 in order that the head 44a of the connector element 44 establishes a robust electrical connection with the surface protection layer 20. However, in practice, the fabrication of a wind turbine blade is a labour-intensive process which requires that the drillings for the connector elements 44 are drilled through the blade shell manually or using a suitable tool to ensure that the drilling are formed as accurately as possible. In such circumstances, the connector element 44 could be aligned incorrectly thereby compromising the electrical connection between the surface protection layer 20 and the down conducting system 26. This could cause electrical arcing which has the potential to damage both the connector element and the conductive layer, thereby further reducing the effectiveness of the electrical connection to the point of failure. The present invention addresses this issue by providing an alignment device that allows for properly aligned holes to be drilled in the surface of the wind turbine blade for receiving connector elements 44 of the lightning protection system.

Figure 4 is an enlarged view of region 'A' in Figure 2 showing one of the connector arrangements 40 in greater detail.

Here, the surface protection layer 20 is shown as defining the leeward surface 14 of the blade 2 together with a set of structural blade components 96 with which the surface protection layer 20 is integrated during a resin infusion and curing process. The structural blade components 96 may include further fabric layers, foam core sections and the like, as would be known to a person skilled in turbine blade design, but which will not be described in detail here for the sake of brevity.

The forming element 92 is an outwardly-tapered annular disc that includes an inner aperture 98 defining an inner wall 100. The forming element is preferably a polymeric part, particularly polyurethane. The forming element 92 sits in-board of the outer insulating layer 82 such that the layer 82 extends over a flat outer face 92a of the forming element 92 and terminates at an aperture 101 aligned with the inner wall 100. Note, however, that the outer insulating layer 82 may instead terminate at the outer edge of the forming element 92.

The conductive layer 86 is in-board of the outer insulating layer 82 and is positioned such that a reinforced zone 90 thereof is in registration with, or 'superimposed' on, the aperture 98 of the forming element 92. Here, the reinforced zone 90 includes first and second metal discs 102 that are cast onto either side of the conductive layer 86 and so are integral parts of the surface protection layer 20.

The dished or domed shape of the forming element 92 raises the level of the reinforced zone 90 so that it defines a recessed base 104 adjacent the inner wall 100 of the forming element 92. The recessed base 104 and the inner wall 100 thereby provide a countersink cavity 105 for the head 44a of the connector element 44.

When installed in the blade, the shank 44b of the connector element 44 locates through an opening 103 through the reinforced zone 90 and the drilling or bore 120 in the structural component 96. The drilling 120 extends between an outer shell surface 121 and an inner shell surface 122, and also extends into receptor base 48 which, in this embodiment, may be threaded for receiving the connector element 44.

In this position, the underside surface of the head 44a of the connector element 44 is opposed to the surface protection layer 20 and serves as a contact face 124 to make electrical contact with it. In this embodiment, the contact face 124 makes direct contact with the reinforced zone 90, such that the reinforced zone 90 can be considered to be a contact region for the surface protection layer 20. As shown in Figure 4, the head 44 makes reliable contact with the recessed base 104 defined by the reinforced zone 90 since the two components are substantially planar, so that the head 44a lies flat on the metal discs 102 of the reinforced zone 90 without any air gaps. However, this electrical connection can be compromised by angular misalignment of the shank 44b of the connector element.

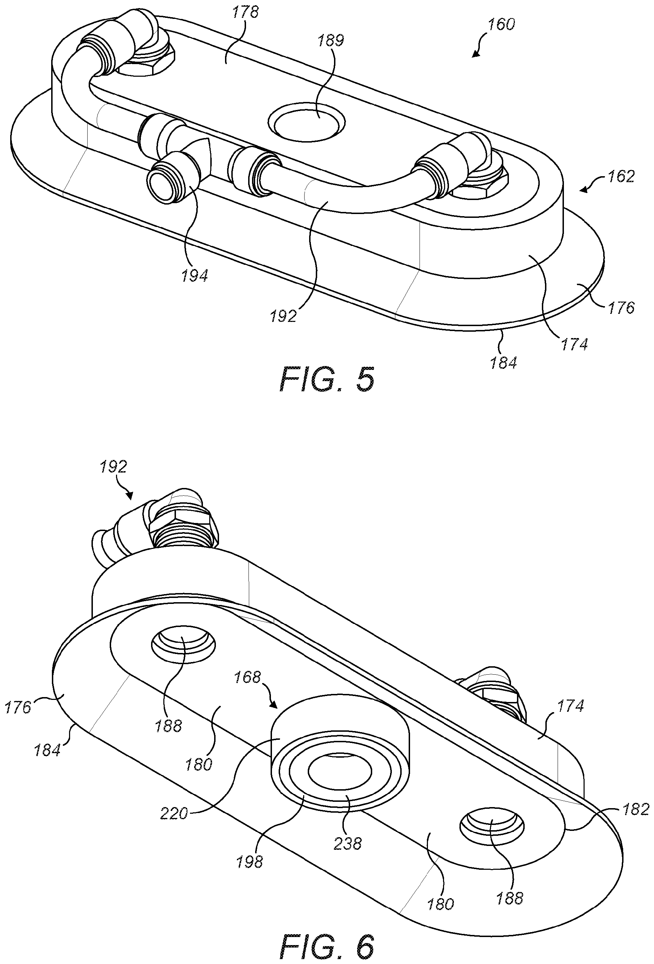

An alignment device 160 in accordance with a first embodiment of the invention will now be described with reference to Figures 5 to 12.

The alignment device 160 comprises a suction cup 162 for attaching the alignment device 160 to a surface of a workpiece and a tool guide 168 for guiding a tool 170 to the surface of the workpiece at a specific orientation. In the described embodiment, the alignment device 160 is configured for aligning a drill bit 170 to the surface 14 of a wind turbine blade 2, such that the drill bit 170 is aligned to produce a drilling or hole 120 in the wind turbine blade 2 that extends perpendicularly from the surface 14.

The suction cup 162 may comprise a rigid body portion 174 having a generally oval shape and an outer sealing element 176. In this embodiment, the outer sealing element 176 is in the form of a flexible sealing skirt and will be referred to as such from now on. Advantageously, the flexible nature of the sealing skirt 176 in this embodiment allows for irregularities and curvature of the target surface 14 of the wind turbine blade 2 to be accommodated, thereby helping to provide a more effective seal between the suction cup 162 and the wind turbine blade 2. However, the skilled person would appreciate that the sealing element 176 could take other forms in other embodiments of the invention.

The rigid body portion 174 includes a major outer surface 178 that faces away from the surface 14 of the wind turbine blade 2 in use and a major inner surface 180 that faces towards the surface 14 of the wind turbine blade 2 in use. Here, the terms "inner" and "outer" are intended to indicate the position of the surfaces 178, 180 with respect to the surface 14 of the wind turbine blade 2 when the alignment device 160 is attached to the wind turbine blade 2 for use. That is to say, the inner surface 180 of the rigid body portion 174 is positioned closer to the surface 14 of the wind turbine blade 2 than the outer surface 178 of the rigid body portion 174 when the alignment device 160 is attached to the wind turbine blade 2.

The outer sealing skirt 176 extends from a circumferential edge 182 of the inner surface 180 of the rigid body portion 174 to define a sealing rim 184 of the suction cup 162 that engages the wind turbine blade 2 to form an outer seal 185 in use. The outer sealing skirt 176 of the suction cup 162 is formed from a flexible material such as rubber or silicone to enable the suction cup 162 to deform as necessary to form an effective seal between the suction cup 162 and the wind turbine blade 2. In some embodiments, the outer sealing skirt 176 may be formed as a moulded component that is stretched over the rigid body portion 174 to be engaged in its final position. Alternatively, the sealing skirt 176 may be secured to the rigid body portion 174 at the circumferential edge 182 of the rigid body portion 174 by means of glue or other fastening means. The sealing skirt 176 may also be 'over moulded' onto the rigid body portion 174. When the alignment device 160 is attached to the wind turbine blade 2, a suction cavity 186 is defined between the tool guide 168, the outer sealing skirt 176 and the surface 14 of the turbine blade 2. Two ports in the form of through-holes 188 are provided in the rigid body portion 174 of the suction cup 162 and are located at opposite sides of the tool guide 168 in use. The through-holes 188 provide a means for evacuating the suction cavity 186 of the suction cup 162 in order to attach the alignment device 160 to the wind turbine blade 2, as will be described in more detail later. It should be noted that although two through-holes 188 are included in this embodiment of the alignment device 160, more or fewer holes 188 are possible, and this should not be considered limiting. A central aperture 189 is provided in the rigid body portion for receiving the tool guide 168 in use.

The alignment device 160 further comprises means for evacuating the suction cup 162 in the form of a vacuum pipe assembly 192 and a vacuum source or pump (not shown). In use, air is evacuated from the suction cavity 186 through the vacuum ports 188 via the vacuum pipe assembly 192 to mount the alignment device 160 to the wind turbine blade 2. The vacuum pipe assembly 192 can be seen in Figure 5. It should be understood that whilst Figure 5 shows just one form that the vacuum pipe assembly 192 may take, many other configurations are possible. For example, in some embodiments a single flexible pipe could be used to couple a single through-hole of the suction cup 162 to the vacuum pump. The vacuum pipe assembly 192 comprises a connector 194 for coupling to the vacuum pump.

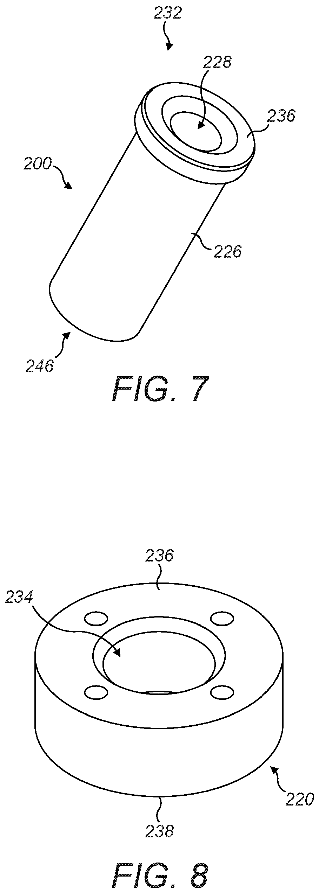

Turning now to the tool guide 168 of the alignment device 160, this will be described with particular reference to Figures 7 to 10.

The tool guide 168 is an annular element located radially inward of the outer sealing skirt 176. The tool guide is attached to the inner surface 180. In this embodiment it includes a sealing element 198 for creating a seal between the tool guide 168 and wind turbine blade 2, as will be explained later. The tool guide comprises a guide insert 200 (shown in Figure 7) receivable in the central aperture 189 of the suction cup 162 and a guide insert collar 220 for receiving a portion of the guide insert 200 in use. In this embodiment, the circumference of the outer sealing skirt 176 and the tool guide 168 are concentric, although this is not essential. Expressed another way, the outer sealing skirt 176 surrounds, or extends about the tool guide 168, both components being centred on the same axis.

Referring to Figure 7 in particular, the guide insert 200 comprises a cylindrical body portion 226 provided with a tool access passage in the form of a central aperture 228 and a circumferential flange 230 provided at an outer end 232 of the guide insert 200. The guide insert aperture 228 is sized to receive a 10.5mm drill bit 70 in this example, but may be sized to accommodate different sized drill bits or other tools in other examples.

Referring now to Figure 8, the guide insert collar 220 is cylindrical in shape and comprises a central aperture 234 for receiving the guide insert 200, an outer surface 236 that abuts with the inner surface 180 of the rigid body portion 174 in use, and an inner surface 238 that abuts with the wind turbine blade 2 in use. In this way, the inner surface 238 of the guide insert collar 220 is positioned closer to the wind turbine blade surface 14 than the outer surface 236 of the guide insert collar 220 in use.

An annular groove is provided on the inner surface 238 of the guide insert collar 220 for receiving the sealing element 198, now referred to as the inner sealing element 198 for clarity. The inner sealing element 198 may be, for example, a sealing ring in the form of a rubber O-ring. Of course, the inner sealing element 198 may be formed of another appropriate material, so long as it is suitable for forming an effective seal with the wind turbine blade 2. In use, the inner sealing element 198 is seated in the annular groove of the guide insert collar 220 and is compressed between the guide insert collar 220 and the wind turbine blade 2 to provide an air-tight inner seal 245 at the interface. Although the inner sealing element 198 of this embodiment is separate from the guide insert collar 220, it should be noted that the inner sealing element 198 may be formed as part of the guide insert collar 220 in other embodiments. Alternatively, a surface of the tool guide may itself form the inner sealing element 198 of the alignment device 160.

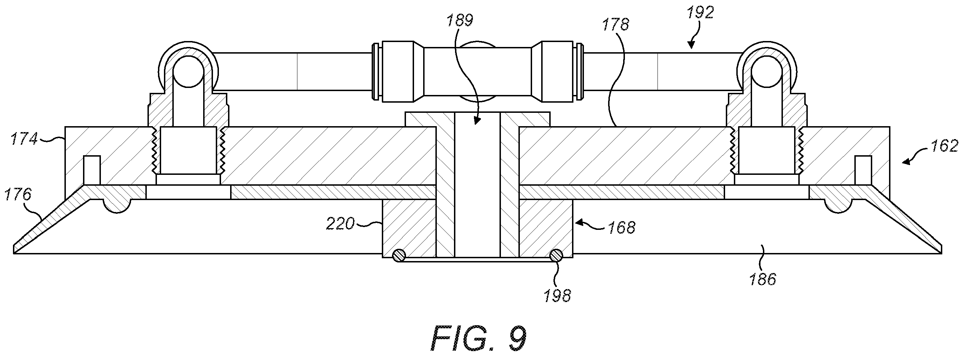

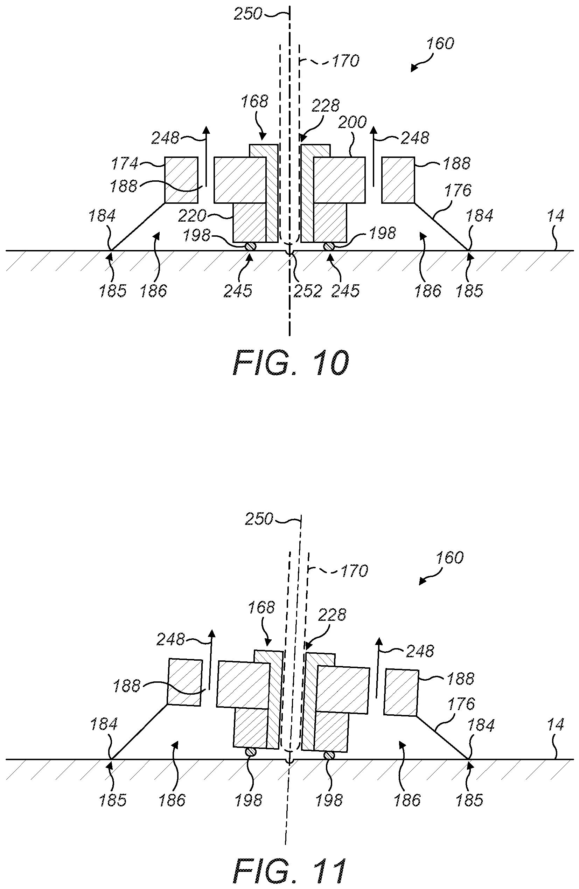

With reference to Figures 9 and 10, when the alignment device 160 is assembled and ready for use, the vacuum pipe assembly 192 is attached to the suction cup 162 at through-holes 188, the guide insert collar 220 is attached to the rigid body portion 174 of the suction cup 162 and the inner sealing element 198 is received in the annular groove of the guide insert collar 220. The guide insert 200 is received in the central aperture 189 of the suction cup 162, such that a leading edge 246 of the guide insert 200 is received in the guide insert collar 220 and the circumferential flange 230 of the guide insert 200 abuts with the outer surface 178 of the rigid body portion 174. The guide insert 200 is received in the central aperture 189 of the suction cup 162, and in the guide insert collar 220 in a tight fit, to ensure minimal lateral movement or rotation of the guide insert 200 during operation of a tool 170 received in the guide insert 200, whilst allowing the guide insert 200 to be received in and removed from the suction cup 162 by the user without the use of additional tooling.

In an example, a locking mechanism may be provided to prevent the rotation of the guide insert 200.

The alignment device 160 has a generally oval or stadium shape. In particular, the suction cup 162 and, thus, the sealing skirt 176 have a generally oval or stadium shape in plan profile. An oval shape is advantageous because it allows the alignment device 160 to be used in narrower spaces than would be possible with a more rounded shape. Furthermore, the oval shape lends itself for use on surfaces having greater curvature, which is especially important for use near the tip end of the wind turbine blade 2.

Figure 10 shows the alignment device 160 attached to the surface 14 of the wind turbine blade 2. Here, the inner sealing element 198 and outer sealing skirt 176 are engaged with the blade surface 14 to form the suction cavity 186, and air has been evacuated from the suction cavity 186 in the direction indicated by arrows 248 by means of the vacuum pipe assembly 192 and vacuum pump (not shown in Figure 10 for clarity). The drill bit 170 is received in the tool access passage 228 such that a longitudinal axis 250 of the tool 170 is perpendicular to the surface 14 of the wind turbine blade 2 at the mouth of the hole 120 for drilling. In this way, the drill bit 170 is arranged to form a hole 120 in the wind turbine blade 2 that extends perpendicularly with respect to the surface 14 of the wind turbine blade 2.

If the drill bit 170 becomes misaligned from its intended orientation, such that the longitudinal axis 250 of the tool 170 is no longer perpendicular to the surface 14 of the wind turbine blade 2 as is shown in Figure 11, the inner seal 245 formed between the inner sealing element 198 and the wind turbine blade surface 14 is broken. This causes air to be drawn into the suction cavity 186 via the tool access passage 228, resulting in an audible hissing noise, and also a loss of suction of the suction cup 162 which may cause the alignment device 160 to disengage from the surface 14 of the wind turbine blade 2. In this way, the alignment device 160 is configured to alert the user when the tool 170 becomes misaligned such that the user can be confident of processing the workpiece 2 at the intended orientation with respect to the target surface 14.

The method for using the alignment device 160 to drill a hole 120 in the surface 14 of the wind turbine blade 2 for receiving a connector element 44 of a lightning protection system 3 will now be described with particular reference to Figures 10 to 12. As has been mentioned already, the alignment device 160 of this embodiment is configured to enable a hole 120 to be drilled that extends perpendicularly from the surface 14 of the blade 2. However, the alignment device 160 may be configured to enable a tool to process a workpiece from a different angle in other embodiments of the invention, according to the intended application. For example, the tool guide 168 may be adapted such that the aperture 228 of the guide insert 200 defines a central aperture that extends at an oblique angle with respect to the surface 14 of the wind turbine blade 2 in use.

In a first step, the surface 14 of the wind turbine blade 2 is prepared by drilling a small locating hole 252 having a depth of 3mm to 5mm in the surface 14 of the wind turbine blade 2, at the position on the blade 2 at which the connector element 44 of the lightning protection system 3 is required. The locating hole 252 marks the position at which the connector element 44 is to be installed on the turbine blade 2, and assists in locating the alignment device 160 in the correct position on the blade 2 for use. As already noted above, the connector elements 44 must be installed at a precise location on the blade 2 in order that the shanks 44b of the connector elements 44 engage with the connector bases 48, 50 in the blade interior. Furthermore, the holes 120 must be drilled in a predetermined orientation with respect to the blade surface 14, 16 to ensure that the correct path through the blade shell is followed. In this case, the hole 120 must be drilled so that it extends along a path that is perpendicular to the blade surface 14, 16 at the mouth of the hole 120.

To prepare the alignment device 160 for attachment to the wind turbine blade 2, the guide insert 200 is inserted into the central aperture 189 of the suction cup 162 until the circumferential flange 230 of the guide insert 200 abuts the outer surface 178 of the rigid body portion 174 of the suction cup 162 and the leading edge 246 of the guide insert 200 is received in the aperture 234 of the guide insert collar 220. The guide insert 200 is now securely held in place in the suction cup 162. In this example, the guide insert aperture 228 is dimensioned for use with a 10.5mm drill bit 170. However, the guide insert 200 may be dimensioned so as to be usable with different sized drill bits, or with other types of tools. In this way, a single suction cup 162 may be usable with numerous different guide inserts, each guide insert being tailored for use with a different type and/or size of tool.

Prior to attachment of the alignment device 160 to the wind turbine blade 2, the vacuum pump (not shown) is coupled to the vacuum pipe assembly 192 and the surface 14 of the wind turbine blade 2 and the sealing surfaces of the alignment device 160 (i.e. the sealing rim 184 of the suction cup 162 and the inner sealing element 198 of the tool guide 168) are wiped clean to ensure that they are free from dirt or dust. This ensures that effective inner and outer seals 245, 185 are formed between the alignment device 160 and the surface 14 of the wind turbine blade 2, and guards against arbitrary loss of suction when the alignment device 160 is mounted to the blade 2.

For attachment, the alignment device 160 is oriented such that the outer surface 178 of the rigid body portion 174 faces away from the surface 14 of the wind turbine blade 2 and the inner surface 180 of the rigid body portion 174 faces towards the surface 14 of the wind turbine blade 2. A drill bit 170 is inserted through the guide insert aperture 228 and the tip of the drill bit 170 is located in the pre-drilled locating hole 252 provided on the surface 14 of the wind turbine blade 2, to ensure that the alignment device 160 is attached at the correct position for use.

The vacuum pump is turned on and the alignment device 160 is applied to the wind turbine blade 2 by pushing the device 160 against the surface 14 of the wind turbine blade 2 such that the sealing rim 184 of the suction cup 162, the inner surface 238 of the guide insert collar 220 and the inner sealing element 198 are in abutment with the surface 14 of the wind turbine blade 2. In this way, the suction cavity 186 is formed as a sealed chamber between the outer seal 185 formed by the outer sealing skirt 176 and the inner seal 245 formed by the inner sealing element 198. Air is evacuated from the sealed suction cavity 186 by means of the vacuum pump, such that a negative pressure is established in the suction cup of the device and the alignment device 160 is held on the blade surface 14. Attaching the alignment device 160 to the wind turbine blade 2 in this way is advantageous as it allows the user of the alignment device 160 to have both hands free for subsequent operation of the tool 170.

Once the alignment device 160 is attached to the wind turbine blade 2, the guide insert aperture 228 is checked for alignment with the locating hole 252 to ensure correct positioning of the alignment device 160 on the blade 2. This may be done by means of a visual inspection. If the alignment device 160 is not correctly positioned, the alignment device 160 is removed and the above process is repeated until correct alignment is achieved.

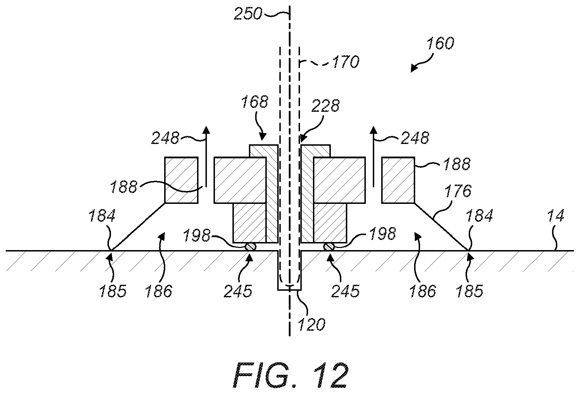

When the alignment device 160 is properly attached at the correct location on the wind turbine blade 2, the drill bit 170 is inserted into the guide insert aperture 228 as shown in Figure 10, and drilled through the surface protection layer 20 and into the connector base 48 to form the hole 120 for receiving the connector element 44 of the lightning protection system 13 as shown in Figure 12. In this embodiment, the hole 120 is formed having a depth of 12mm in the connector base 48.

The alignment device 160 is configured such that a tool received in the tool guide 168 approaches the blade surface 14 perpendicularly to the blade surface 14. In this way, a drill bit 170 received in the tool guide 168 of the invention is operable to form the hole 120 such that it extends below the surface of the blade 2 at an angle that is perpendicular to the blade surface 14.

Once drilling is complete, the drill bit 170 is removed from the guide insert 200. Compressed air may be used to remove any metal swarf or debris from the drilled hole 120.

The depth of the drilled hole 120 may be measured using a vernier gauge to ensure the required depth has been achieved. If the hole 120 is found to be too shallow, the alignment device 160 may be re-attached such that further drilling can be effected. Alternatively, a depth probe may be inserted through the guide insert aperture 228 to measure the depth of the drilled hole 120 whilst the alignment device 160 is attached to the wind turbine blade 2.

As a further step, once the required hole depth has been achieved, the drill bit 170 and guide insert 200 are removed from the central aperture 189. A guide insert 200 suitable for receiving an appropriate thread tap (not shown) is then inserted into the tool guide aperture 228, and the thread tap is inserted into the guide insert aperture 228. A thread tap wrench may then be used in combination with the thread tap to create a thread in the hole 120 for receiving the connector element 44 of the lightning protection system 13.

In this embodiment of the invention, a 10.5mm drill bit 170 is used and the hole 120 is drilled through the surface protection layer 20 and into the connector base 48 to form a 12mm deep hole in the connector base 48. The required depth of hole and dimension of the drill bit 170 may vary for different lightning protection systems 13 and turbine blades 2, and for different applications of the alignment device 160.

It should be noted that in the unlikely event that the alignment device 160 detaches from the wind turbine blade 2 prematurely during the drilling process, the suction cup 162 and the sealing element 198 are checked for damage and re-cleaned, the surface 14 of the wind turbine blade 2 is re-cleaned, and the vacuum pipe assembly 192 and any additional piping used to couple the vacuum pump to the vacuum pipe assembly 192 is checked for damage or blockages before re-attachment.

Whilst an alignment device 160 having a generally oval or stadium shape has been described above, the skilled person would understand that other possible shapes and configurations of the alignment device 160 are possible. For example, the alignment device may have a circular shape in plan profile, i.e. the outer sealing element 176 has a generally round circumference. A different shape of the alignment device allows for use in different applications or scenarios having different space requirements.

As has been described above, the inner sealing element 198 is located on the tool guide 168. However, in another example, the inner sealing element 198 may not be positioned on the tool guide 168 and is instead positioned between the outer sealing element 176 and the tool guide - in this example, the inner sealing element 198 could effectively be a sealing skirt attached to the inner surface 180 of the alignment device 160.

The inner surface 238 of the tool guide 168 that abuts with the wind turbine blade surface 14 does not have to be a planar surface. Instead, the inner surface 238 could have a curvature which is designed to specifically match the curvature of the blade surface 14 in order to provide a better seal.

## Claims

1. A device (160) for aligning a tool (170) at a predetermined orientation with respect to a target surface (14) of a wind turbine blade, the device comprising:
a suction cup (162) having an outer sealing element (176) for sealing against the target surface (14);
an inner sealing element (198) located radially inward of the outer sealing element (176) for sealing against the target surface (14), a suction cavity (186) being defined between the outer sealing element and the inner sealing element; and
a tool guide (168) located radially inward of the inner sealing element, wherein the tool guide defines a tool access passage (228).

2. The device of Claim 1, wherein the tool guide (168) is an annular element.

3. The device of Claims 1 or 2, wherein the tool guide (168) includes a guide insert receivable in the tool access passage (228).

4. The device of Claims 1 to 3, wherein the inner sealing element (198) is a sealing ring.

5. The device of Claims 1 to 4, wherein the outer sealing element (176) and the tool guide (168) are concentric.

6. The device of Claims 1 to 5, wherein the outer sealing element (176) and/or the inner sealing element (198) are flexible so as to be able to accommodate irregularities and curvature of the target surface (14).

7. The device of Claims 1 to 6, wherein the suction cup (162) and, thus, the outer sealing element (176), are circular in plan profile or have a stadium shape or oval shape in plan profile.

8. The device of Claims 1 to 7, further including means for evacuating the suction cavity (186), and preferably the means for evacuating the suction cavity includes a port for connection to a vacuum source.

9. The device of Claims 1 to 8, wherein the device is configured such that misalignment of a tool (170) received in the tool guide (168) with respect to the target surface (14) of the wind turbine blade causes the device to disengage from the wind turbine blade and/or results in an audible noise that alerts a user of the device to the misalignment of the tool.

10. The device of Claims 1 to 9, wherein the device is configured such that a longitudinal axis of a tool (170) received in the tool guide (168) is perpendicular or is at an oblique angle to the target surface (14) of the wind turbine blade when the device is attached to the target surface, in use.

11. The device of any one of the preceding Claims, wherein the inner sealing element (198) is located on the tool guide (168) or is located between the outer sealing element (176) and the tool guide.

12. The device of any one of the preceding claims, wherein the tool comprises a drill bit (170) of a drill.

13. A method of guiding a tool (170) with respect to a surface (14) of a wind turbine blade, the method comprising:
applying a device (160) in accordance with any one of Claims 1 to 12 to the surface of the wind turbine blade;
establishing a negative pressure in the suction cavity (186) of the device;
bringing a tool (170) into engagement with the tool guide (168) of the device;
using the tool on the wind turbine blade.

14. The method of Claim 13, wherein the tool (170) is a drill bit of a drill, and wherein using the tool on the wind turbine blade comprises drilling a hole (120) in the wind turbine blade for receiving a component of a lightning protection system.

15. The method of Claims 13 or 14, further comprising locating the device on the wind turbine blade by means of a pre-drilled locating hole.

## Patentansprüche

1. Vorrichtung (160) zum Ausrichten eines Werkzeugs (170) an einer vorbestimmten Orientierung in Bezug auf eine Zieloberfläche (14) eines Windkraftanlagenblatts, wobei die Vorrichtung umfasst:
einen Saugnapf (162), der ein äußeres Abdichtelement (176) zum Abdichten gegen die Zieloberfläche (14) aufweist;
ein inneres Abdichtelement (198), das radial einwärts des äußeren Abdichtelements (176) liegt, um gegen die Zieloberfläche (14) abzudichten, einen Saughohlraum (186) der zwischen dem äußeren Abdichtelement und dem inneren Abdichtelement definiert ist; und
eine Werkzeugführung (168), die radial von dem inneren Abdichtelement nach innen liegt, wobei die Werkzeugführung eine Werkzeugzugangspassage (228) definiert.

2. Vorrichtung nach Anspruch 1, wobei die Werkzeugführung (168) ein ringförmiges Element ist.

3. Vorrichtung nach Anspruch 1 oder 2, wobei die Werkzeugführung (168) einen Führungseinsatz, der in der Werkzeugzugangspassage (228) aufnehmbar ist, beinhaltet.

4. Vorrichtung nach den Ansprüchen 1 bis 3, wobei das innere Abdichtelement (198) ein Dichtring ist.

5. Vorrichtung nach den Ansprüchen 1 bis 4, wobei das äußere Abdichtelement (176) und die Werkzeugführung (168) konzentrisch sind.

6. Vorrichtung nach den Ansprüchen 1 bis 5, wobei das äußere Abdichtelement (176) und/oder das innere Abdichtelement (198) derart biegsam sind, dass sie fähig sind, Unregelmäßigkeiten und Krümmung der Zieloberfläche (14) unterzubringen.

7. Vorrichtung nach den Ansprüchen 1 bis 6, wobei der Saugnapf (162) und folglich das äußere Abdichtelement (176) im Planprofil kreisförmig sind oder eine Stadionform oder ovale Form im Planprofil aufweisen.

8. Vorrichtung nach den Ansprüchen 1 bis 7, die weiter Mittel zum Absaugen des Saughohlraums (186) beinhalten, wobei das Mittel zum Absaugen des Saughohlraums vorzugsweise eine Öffnung zum Verbinden mit einer Vakuumquelle beinhaltet.

9. Vorrichtung nach den Ansprüchen 1 bis 8, wobei die Vorrichtung derart konfiguriert ist, dass ein Ausrichtungsfehler eines Werkzeugs (170), das in der Werkzeugführung (168) aufgenommen ist, in Bezug auf die Zieloberfläche (14) des Windkraftanlagenblatts bewirkt, dass die Vorrichtung aus dem Windkraftanlagenblatt ausrückt und/oder in einem hörbaren Geräusch resultiert, das einen Benutzer der Vorrichtung über den Ausrichtungsfehler des Werkzeugs warnt.

10. Vorrichtung nach den Ansprüchen 1 bis 9, wobei die Vorrichtung derart konfiguriert ist, dass eine Längsachse eines Werkzeugs (170), das in der Werkzeugführung (168) aufgenommen ist, zu der Zieloberfläche (14) des Windkraftanlagenblatts senkrecht ist oder an einem schiefen Winkel liegt, wenn die Vorrichtung an der Zieloberfläche bei Verwendung angebracht ist.

11. Vorrichtung nach einem der vorstehenden Ansprüche, wobei das innere Abdichtelement (198) auf der Werkzeugführung (168) liegt oder zwischen dem äußeren Abdichtelement (176) und der Werkzeugführung liegt.

12. Vorrichtung nach einem der vorstehenden Ansprüche, wobei das Werkzeug einen Bohrmeißel (170) eines Bohrers umfasst.

13. Verfahren zum Führen eines Werkzeugs (170) in Bezug auf eine Oberfläche (14) eines Windkraftanlagenblatts, wobei das Verfahren umfasst:
Anlegen einer Vorrichtung (160) gemäß einem der Ansprüche 1 bis 12 auf die Oberfläche des Windkraftanlagenblatts;
Herstellen eines Unterdrucks in dem Saughohlraum (186) der Vorrichtung;
Ineingriffbringen eines Werkzeugs (170) mit der Werkzeugführung (168) der Vorrichtung;
Verwenden des Werkzeugs auf dem Windkraftanlagenblatt.

14. Verfahren nach Anspruch 13, wobei das Werkzeug (170) ein Bohrmeißel eines Bohrers ist, und wobei das Verwenden des Werkzeugs auf dem Windkraftanlagenblatt das Bohren einer Bohrung (120) in das Windkraftanlagenblatt zum Aufnehmen eines Bauteils eines Blitzschutzsystems umfasst.

15. Verfahren nach Anspruch 13 oder 14, das weiter das Positionieren der Vorrichtung auf dem Windkraftanlagenblatt mittels einer vorgebohrten Positionsbohrung umfasst.

## Revendications

1. Dispositif (160) pour aligner un outil (170) à une orientation prédéterminée par rapport à une surface cible (14) d'une pale d'éolienne, le dispositif comprenant :
une ventouse (162) présentant un élément d'étanchéité extérieur (176) pour une étanchéité contre la surface cible (14) ;
un élément d'étanchéité intérieur (198) situé radialement vers l'intérieur de l'élément d'étanchéité extérieur (176) pour une étanchéité contre la surface cible (14), une cavité d'aspiration (186) étant définie entre l'élément d'étanchéité extérieur et l'élément d'étanchéité intérieur ; et
un guide d'outil (168) situé radialement vers l'intérieur de l'élément d'étanchéité intérieur, dans lequel le guide d'outil définit un passage d'accès d'outil (228).

2. Dispositif selon la revendication 1, dans lequel le guide d'outil (168) est un élément annulaire.

3. Dispositif selon la revendication 1 ou 2, dans lequel le guide d'outil (168) inclut un insert de guide pouvant être reçu dans le passage d'accès d'outil (228).

4. Dispositif selon les revendications 1 à 3, dans lequel l'élément d'étanchéité intérieur (198) est une bague d'étanchéité.

5. Dispositif selon les revendications 1 à 4, dans lequel l'élément d'étanchéité extérieur (176) et le guide d'outil (168) sont concentriques.

6. Dispositif selon les revendications 1 à 5, dans lequel l'élément d'étanchéité extérieur (176) et/ou l'élément d'étanchéité intérieur (198) sont flexibles de manière à pouvoir s'adapter à des irrégularités et courbure de la surface cible (14).

7. Dispositif selon les revendications 1 à 6, dans lequel la ventouse (162) et, ainsi, l'élément d'étanchéité extérieur (176), sont circulaires en profil de plan ou présentent une forme de stade ou une forme ovale en profil de plan.

8. Dispositif selon les revendications 1 à 7, incluant en outre un moyen pour évacuer la cavité d'aspiration (186), et de préférence le moyen d'évacuation de la cavité d'aspiration inclut un orifice pour raccordement à une source de vide.

9. Dispositif selon les revendications 1 à 8, dans lequel le dispositif est configuré de telle sorte qu'un désalignement d'un outil (170) reçu dans le guide d'outil (168) par rapport à la surface cible (14) de la pale d'éolienne amène le dispositif à se désolidariser de la pale d'éolienne et/ou provoque un bruit audible qui alerte un utilisateur du dispositif du désalignement de l'outil.

10. Dispositif selon les revendications 1 à 9, dans lequel le dispositif est configuré de telle sorte qu'un axe longitudinal d'un outil (170) reçu dans le guide d'outil (168) est perpendiculaire ou est à un angle oblique par rapport à la surface cible (14) de la pale d'éolienne lorsque le dispositif est fixé à la surface cible, lors de l'utilisation.

11. Dispositif selon l'une quelconque des revendications précédentes, dans lequel l'élément d'étanchéité intérieur (198) se situe sur le guide d'outil (168) ou se situe entre l'élément d'étanchéité extérieur (176) et le guide d'outil.

12. Dispositif selon l'une quelconque des revendications précédentes, dans lequel l'outil comprend un foret (170) d'une perceuse.

13. Procédé de guidage d'un outil (170) par rapport à une surface (14) d'une pale d'éolienne, le procédé comprenant :
l'application d'un dispositif (160) conformément à l'une quelconque des revendications 1 à 12 à la surface de la pale d'éolienne ;
l'établissement d'une pression négative dans la cavité d'aspiration (186) du dispositif;
le fait d'amener un outil (170) en prise avec le guide d'outil (168) du dispositif ;
l'utilisation de l'outil sur la pale d'éolienne.

14. Procédé selon la revendication 13, dans lequel l'outil (170) est un foret d'une perceuse, et dans lequel l'utilisation de l'outil sur la pale d'éolienne comprend le perçage d'un trou (120) dans la pale d'éolienne pour recevoir un composant d'un système de protection contre la foudre.

15. Procédé selon les revendications 13 ou 14, comprenant en outre le positionnement du dispositif sur la pale d'éolienne à l'aide d'un trou de positionnement pré-percé.
